# EUROPEAN PATENT APPLICATION

(11) **EP 0 877 276 A2**
(43) Date of publication of application: **11.11.1998**
(21) Application number: 98830253.5
(22) Date of filing: 27.04.1998
(51) Int. Cl.: G02C 5/04

(54) **Adjustable eyeglasses frame with interchangeable lenses**

(30) Priority: 09.05.1997 IT RM970274
(71) Applicant: Palmeri, Leonardo, 04029 Sperlonga (LT) (IT)
(72) Inventor: Palmeri, Leonardo, 04029 Sperlonga (LT) (IT)
(74) Representative: Iannone, Carlo Luigi

(57) **Abstract**

The invention concerns an eyeglass frame viewer characterised in that it comprises a structure (1) and a series of corrective and/or neutral lenses (13), each of them provided with a lens-bearing rim (14), said structure (1) being comprised of a front element (2) and two lateral rods (3), adjustable in length, coupled at one end of said front element (2) in such a way to be able to be able to adjust their distance with respect to the barycentre of the same front element, said front element (2) providing two supports (12) on which said lenses (13) with lens-bearing rim (14) are coupled, movable along said front element (2), said structure (1) and said lens-bearing rims (14) being realised by a transparent plastic material, preferably having a high friction coefficient.

## Description

The present invention relates to an eyeglasses frame viewer.

More particularly, the invention concerns a viewer of the above kind, transparent and conformable to any kind of user, able to allow to the user to try on a frame substantially without perceiving the presence of said viewer, making a substantial correction of any view defect.

It is known that in order to correct view defects, view eyeglasses provided with suitable corrective lenses are widely employed.

Procedure presently followed from the perception of the defect up to the purchase of view eyeglasses, first of all provides that the subject is subjected to a measurement of said view defect with an oculistic centre or with a optical shop. Said measurement is carried out by sophisticated test eyeglasses, of the front portion of which graduated corrective lenses are inserted, and it is eventually preceded by a first approximation computerised revelation of the kind and of the grade of the defect.

Said test eyeglasses, which are usually metallic, provides a bulky and bulky frame, on the front element of which even more than one lens for each eye can be introduced, and a rather high number of test corrective graduated lenses, said lenses being contoured by a plastic or metal rigid support, on which a projecting lug allowing the handling of the same lens is provided, the graduation of the lens being engraved on said lug.

Following said measurement of the view defect, the subject must choose a frame with the optical shop on which the corrective lenses must be applied, suitable shaped to conform to the chosen frame.

Obviously, frames available with a optical shop are without corrective lenses.

Therefore, at the moment of choosing said frame without corrective lenses, the person is not able to fully evaluate, particularly if affected of a particular serious view defect, the aesthetical effect of the frame.

The above test eyeglasses for the measurement of the view cannot obviate to said drawback since, as already mentioned is bulky and does not allow to wear at the same time another frame, as well as does not allow to evaluate its aesthetical effect.

Same considerations can be made for eventual view eyeglasses already owned by the buyer, since, also in this case, evaluation of the aesthetical effect of the new frame is invalidated by the presence of the previous frame.

The only alternative given to the person is to interpose the test graduated corrective lenses of the measurement eyeglasses between the test frame and the eyes, manually keeping them in position, preferably with the help of the optician.

However, said alternative is uncomfortable, invalidates said evaluation of the aesthetical effect of the frame and finally cannot be used in presence of composed view defects, the correction of which requires the superimposition of more lenses.

Therefore, the client is prevented from correctly evaluating the aesthetical effect, which is intrinsically subjective, of the frame to be bought and is obliged to choose following the advise of the optician or of another reliable person.

In this situation it is included the solution suggested according to the present invention which allows to solve all the above problems.

Therefore, the object of the present invention is that of allowing to the client of an optician shop to can see in a sufficient correct way, and specifically to be able to try on a frame substantially without perceiving the presence of any other object, personally evaluating the aesthetical effect of said frame.

These and other results are obtained according to the present invention by the realisation of an universal viewer conformable to any kind of user.

It is therefore specific object of the present invention a eyeglasses frame viewer characterised in that it comprises a structure and a series of corrective and/or neutral lenses, each of them provided with a lens-bearing rim, said structure being comprised of a front element and two lateral rods, adjustable in length, coupled at one end of said front element in such a way to be able to adjust their distance with respect to the barycentre of the same front element, said front element providing two supports on which said lenses with lens-bearing rim are coupled, movable along said front element, said structure and said lens-bearing rims being realised by a transparent plastic material, preferably having a high friction coefficient.

Still according to the invention, each one of said lateral rods can provide a central tubular element and two end tubular elements, said central tubular element being telescopically coupled with said two end tubular elements, an end tubular element, coupled at the corresponding end of said front element, being shaped in such a way to substantially bend at 90° along the horizontal plane, the other end tubular element preferably having the end not cooperating with the other tubular elements slightly curved.

Always according to the invention, said central tubular element can be also rotatably coupled with said two end tubular elements.

Furthermore, according to the invention, said tubular elements can provide screws for the reciprocal fixing of the tubular elements.

Still according to the invention, said coupling of each of said rods with said front element can provide a spacer, rigidly coupled at the end of said front element, upon which the respective rod is slidably coupled.

Always according to the invention, said two supports on which said lenses provided with lens-bearing rim couple, have a cylindrical shape and provide a cylindrical through hole, parallel with respect to its axis and rotatably and slidably coupled with said front element.

Furthermore, according to the invention, said coupling between each of said two supports and said lenses provided with lens-bearing rim, a projection can be provided on said lens-bearing rim, in such a way to insert into a corresponding seat provided on said supports, said projection being preferably cylindrically shaped, with the axis substantially parallel with respect to the plane of the lens-bearing rim and perpendicular to the axis of the lens-bearing rim, in such a way to be slidably and rotatably coupled with its seat.

Still according to the invention, said lens-bearing rims provide a flat region, preferably opposed with respect to said projection, along the lateral surface, upon which the value of the graduation of the relevant corrective and/or neutral lens is engraved.

Always according to the invention, the viewer can provide two lens-supports for the superimposition of more than one corrective lens, realised by the same material of said structure and of said lens-bearing rims, and coupable with said supports provided on the front element, which preferably provide a housing seat for two superimposed lens-bearing rims.

The present invention will be now described, for illustrative but not limitative purposes, according to its preferred embodiments, with particular reference to the figures of the enclosed drawings, wherein:

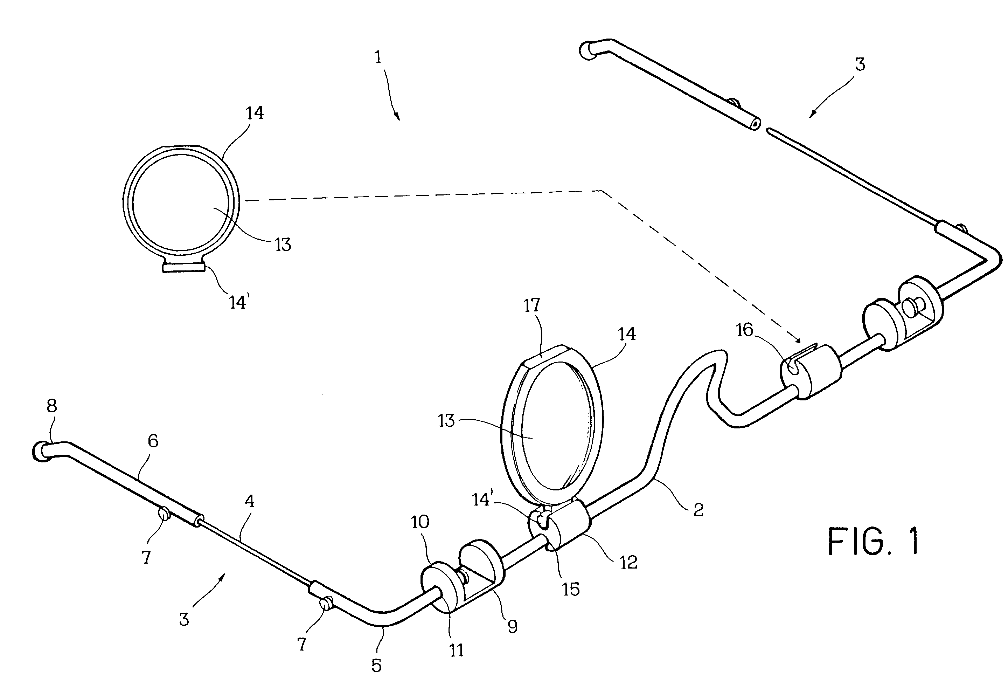

figure 1 shows a perspective view of the preferred embodiment of the present invention;
figure 2 shows a perspective view of the preferred embodiment of a lens-bearing support according to the invention; and
figure 3 shows a lateral view of the preferred embodiment of a lens-bearing support according to the invention.

Referring now to the enclosed figures, it can be noted that the viewer for eyeglasses frames according to the invention comprises a structure 1, comprised of a front element 2, anatomically shaped to rest on the nose of the wearer, and of two lateral rods.

The rods 3 comprise a central tubular element 4 and two end tubular elements 5 and 6. Said central tubular element 4 is telescopically and rotatably coupled with said two end tubular elements 5 and 6. Said end tubular elements 5 and 6 each provide a screw 7 for the fixing of said central tubular element 4.

Suitably adjusting the deepness of the insertion of said central tubular element 4 within said end tubular elements 5 and 6, it is possible to adjust the length of the respective rod 3, allowing to the viewer to conform to different anatomical distances between the eye and the ear.

The end tubular element 5, coupled with said front element, is shaped in such a way to bend substantially for 90° along a substantially horizontal plane. The other end tubular element 6 has the end 8 not interacting with the central tubular element slightly curved to anatomically conform above the ear in the same way of the known eyeglasses rods.

However, since said central tubular element 4 and said end tubular element 6 are rotatably coupled, said end 8 can rest within the ear in case it is necessary, such as in case at the same time of the viewer an eyeglasses frame to be tried on is worn, and the presence of two rods on the ear is not tolerated.

The end tubular element 5 couples with said front element 2 by a spacer 9, rigidly coupled at the end of said front element 2. Said spacer 9 ends with a circular disc 10, parallel with respect to the symmetry plane of said front element 2, providing a circular through hole 11, having its axis parallel with respect to the axis of said disc 10, the section of which corresponds to the section of the coupled end tubular element 5.

Particularly, said end tubular element 5 is adjustably introduced within said hole 10. This allows to adjust the distance between the relevant rod 3 and the barycentre of said front element 2, allowing to the viewer to conform to different sizes of the face. Furthermore, by this kind of solution, rod 3 is rotatable with respect to the plane individuated by the axis of the other rod and the front element 2, allowing to the viewer to conform to different anatomical shapes.

Said front element 2 provides two supports 12, movable along said front element 2, to allow to the viewer to conform to different inter-pupillary distances. Lenses 13 provided with lens-bearing rim 14 are coupled on said supports 12.

Said two supports 12 are cylindrical and provide a cylindrical through hole 15, parallel with respect to its axis, rotatably coupled with said front element 2.

Said lens-bearing rims 14 provide a lower cylindrical projection 14' to be inserted into a corresponding seat 16 on said supports 12, and in such a way to be slidably and rotatably coupled with said seat.

Said lens-bearing rims 14 provide along the lateral surface a flat zone 17, opposed with respect to said projection 15, on which the value of the graduation of the relevant corrective and/or neutral lens 13 is engraved.

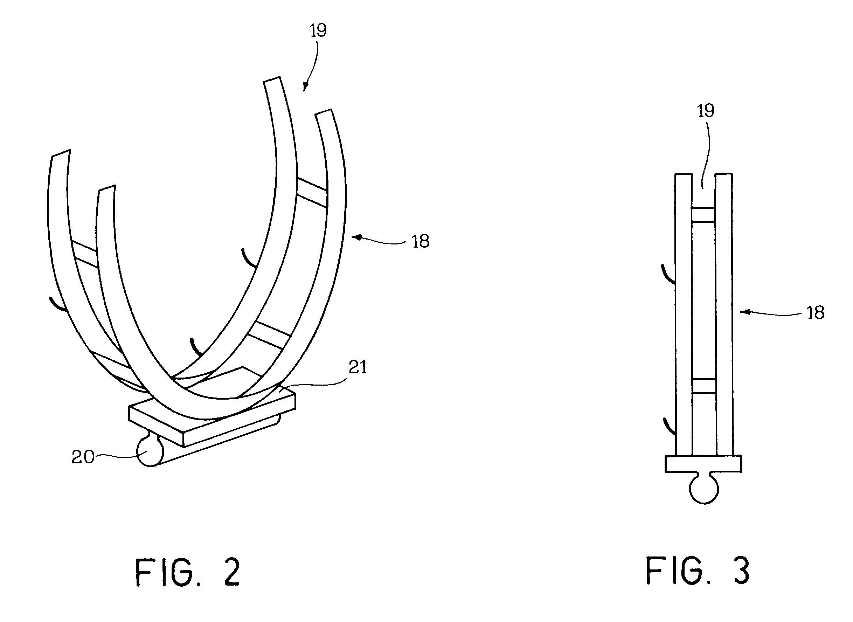

The viewer, according to the preferred embodiment of the present invention shown in the figures, further comprises tow lens-bearing supports 18 (see figures 2 and 3), for the superimposition of two corrective lenses 13 into a housing seat 19, providing a lower cylindrical projection 20 for the coupling with the supports 12 similar to the projection 14' of the lens-bearing rims 14.

Particularly, said seat 19 provides, in correspondence of said projection 20, a flat zone 21 upon which the zones 17 of the lens-bearing rims 14 of the two lenses 13 which are superimposed on the lens-bearing support 18 rest .

Said structure 1, said lens-bearing rims 14 and said lens-bearing supports 18 are made up of transparent and high friction coefficient plastic material. This prevents that the various elements of the viewer reciprocally coupled move from their positions without an external intervention.

The viewer according to the invention can be advantageously used with an optical centre to substantially correct the view defects of the clients, allowing them to try on frames without corrective lenses, wearing them contemporaneously to the viewer.

In fact, transparency of the material by which the viewer is realised allows to try on a frame substantially without perceiving the presence of the same viewer, personally evaluating the aesthetical effect of said frame.

Furthermore, it is possible to provide a reduced number of corrective lenses, since its object is not that of providing a measurement of the view defects, but that of allowing a sufficient view capability.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Eyeglasses frame viewer characterised in that it comprises a structure and a series of corrective and/or neutral lenses, each of them provided with a lens-bearing rim, said structure being comprised of a front element and two lateral rods, adjustable in length, coupled at one end of said front element in such a way to be able to be able to adjust their distance with respect to the barycentre of the same front element, said front element providing two supports on which said lenses wit lens-bearing rim are coupled, movable along said front element, said structure and said lens-bearing rims being realised by a transparent plastic material, preferably having a high friction coefficient.

2. Eyeglasses frame viewer according to claim 1, characterised in that each one of said lateral rods can provide a central tubular element and two end tubular elements, said central tubular element being telescopically coupled with said two end tubular elements, an end tubular element, coupled at the corresponding end of said front element, being shaped in such a way to substantially bend at 90° along the horizontal plane, the other end tubular element preferably having the end not cooperating with the other tubular elements slightly curved.

3. Eyeglasses frame viewer according to claim 2, characterised in that said central tubular element is rotatably coupled with said two end tubular elements.

4. Eyeglasses frame viewer according to claim 1 or 2, characterised in that screws are provided for the reciprocal fixing of the tubular elements.

5. Eyeglasses frame viewer according to one of the preceding claims, characterised in that said coupling of each of said rods with said front element provides a spacer, rigidly coupled at the end of said front element, upon which the respective rod is slidably coupled.

6. Eyeglasses frame viewer according to one of the preceding claims, characterised in that said two supports on which said lenses provided with lens-bearing rim couple, have a cylindrical shape and provide a cylindrical through hole, parallel with respect to its axis and rotatably and slidably coupled with said front element.

7. Eyeglasses frame viewer according to one of the preceding claims, characterised in that said coupling between each of said two supports and said lenses provided with lens-bearing rim, a projection is provided on said lens-bearing rim, in such a way to insert into a corresponding seat provided on said supports.

8. Eyeglasses frame viewer according to claim 7, characterised in that said projection is cylindrically shaped, with the axis substantially parallel with respect to the plane of the lens-bearing rim and perpendicular to the axis of the lens-bearing rim, in such a way to be slidably and rotatably coupled with its seat.

9. Eyeglasses frame viewer according to claim 7 or 8, characterised in that said lens-bearing rims provide a flat region, preferably opposed with respect to said projection, upon which the value of the graduation of the relevant corrective and/or neutral lens is engraved.

10. Eyeglasses frame viewer according to one of the preceding claims, characterised in that it provides two lens-supports for the superimposition of more than one corrective and/or neutral lens, realised by the same material of said structure and of said lens-bearing rims, and coupable with said supports provided on the front element.

11. Eyeglasses frame viewer according to claim 10, characterised in that said lens-bearing supports provide a housing seat for two superimposed lens-bearing rims.

12. Eyeglasses frame viewer according to one of the preceding claims, characterised in that said transparent plastic material by which said structure, said lens-bearing rims and said lens-bearing supports, has a high friction coefficient.
